(19) Europäisches Patentamt / European Patent Office / Office européen des brevets

(11) **EP 1 904 804 B1**

(12) **EUROPÄISCHE PATENTSCHRIFT**

(45) Veröffentlichungstag und Bekanntmachung des Hinweises auf die Patenterteilung:
**15.04.2015   Patentblatt 2015/16**

(21) Anmeldenummer: **06777384.6**

(22) Anmeldetag: **21.06.2006**

(51) Int Cl.:
***G01B 15/02*** *(2006.01)*      ***G01B 7/06*** *(2006.01)*
***G01V 3/12*** *(2006.01)*

(86) Internationale Anmeldenummer:
**PCT/EP2006/063383**

(87) Internationale Veröffentlichungsnummer:
**WO 2007/006626 (18.01.2007 Gazette 2007/03)**

(54) **MESSVORRICHTUNG ZUM ELEKTROMAGNETISCHEN MESSEN EINER WANDDICKE**

APPARATUS FOR ELECTROMAGNETICALLY MEASURING A WALL THICKNESS

DISPOSITIF DE MESURE PERMETTANT LA MESURE ELECTROMAGNETIQUE D'UNE EPAISSEUR DE PAROI

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.07.2005   DE 102005032459**

(43) Veröffentlichungstag der Anmeldung:
**02.04.2008   Patentblatt 2008/14**

(73) Patentinhaber: **ROBERT BOSCH GMBH
70442 Stuttgart (DE)**

(72) Erfinder:
• **MAHLER, Michael
  70771 Leinfelden-Echterdingen (DE)**
• **HOFFMANN, Ulli
  75223 Nieffern-Oeschelbronn (DE)**
• **KRAPF, Reiner
  72770 Reutlingen (DE)**
• **TSCHERNER, Thomas
  34121 Kassel (DE)**

(56) Entgegenhaltungen:
**EP-A2- 0 382 981      GB-A- 2 307 811
US-A- 5 835 053**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Stand der Technik

Die Erfindung geht aus von einer Messvorrichtung nach dem Oberbegriff des Anspruchs 1 und von einem Verfahren zum Bestimmen einer Wanddicke nach dem Oberbegriff des Anspruchs 9.

Aus der US 5,434,500 ist eine Messvorrichtung mit einer Sendereinheit zum Erzeugen eines elektromagnetischen, eine Wand durchgrigenden Messfelds, und zwar eines statischen Magnetfelds, bekannt. Die Messvorrichtung umfasst eine Empfängereinheit mit zwei Paaren von jeweils zwei Detektoren zum Detektieren wenigstens eines Teils des Messfelds. Eine Auswerteinheit bestimmt eine relative Stärke des von den verschiedenen Detektoren erfassten Messfelds. Dadurch wird einem Bediener das Auffinden der Position der Sendereinheit bzw. deren Projektion auf die gegenüberliegende Seite der Wand ermöglicht. Durch gattungsgemäße Messvorrichtungen kann ein voraussichtlicher Austrittsort eines Durchbruchs bzw. einer Durchbruchsbohrung durch die Wand bestimmt werden.

Aus der US 5,835,053 ist ein fahrzeuggebundenes Straßen Radar System bekannt, welches es ermöglicht, den Schichtaufbau und insbesondere auch unter der Oberfläche verborgene Anomalien des Straßeriaufbaus zu vermessen. Das System der US 5,835,053 besitzt dazu einen 1GHz Impulsradar-Transmitter mit zumindest einer Dipol-Antenne an zumindest zwei Empfangsantennen, ebenfalls in Dipolform. Jede der Empfangsantennen besitzt einen anderen Abstand von der Sendeantenne der Anordnung, so dass das System ein "Ground-Penetration-Radar-System" bildet. Darüber hinaus besitzt das System der US 5,835,053 auch eine 3GHz Sendeantenne nebst Empfangsantenne in Hornform. Das System der US 5,835,053 kann mittels eines Trägerfahrzeuges oder eines gezogenen Anhängers über eine Straße gezogen werden, um Verlaufsprofile aufzunehmen.

Die GB 2 307 811 A beschreibt ein System zur Bestimmung der Dicke eines inhomogenen Mediums, wie beispielsweise eine Straßenstruktur, mit einem Impulsradar Transmitter und zwei voneinander beabstandeten Empfängern. Aus der unterschiedlichen Laufzeit der Radarsignale zu den unterschiedlich angeordneten Empfängern kann mit der Vorrichtung der GB 2 307 811 A auf die Schichtstruktur einer Straße oder auf Anomalien in ihrem inneren geschlossen werden. Aus der EP 0 382 981 A2 ist eine elektromagnetische Wanddickenbestimmung bekannt, wobei eine Sendereinheit und mehrere Empfängereinheiten auf der Wand angeordnet sind.

Vorteile der Erfindung

Die Erfindung geht aus von einer Messvorrichtung mit einer Sendereinheit zum Erzeugen eines elektromagnetischen, eine Wand durchdringenden Messfelds, mit einer Empfängereinheit zum Detektieren wenigstens eines Teils des Messfelds und mit einer Auswerteinheit zum Auswerten eines von der Empfängereinheit detektierten Signals.

Gemäß Anspruch 1 ist die Auswerteinheit dazu vorgesehen ist, zumindest eine Kenngröße für eine Ortsabhängigkeit des Messfelds entlang der Wand zu ermitteln und abhängig von der Kenngröße eine Wanddicke der Wand zu bestimmen. Durch eine geeignete Wahl der Kenngröße kann eine zumindest weitestgehend von den dielektrischen Eigenschaften der Wand unabhängige Bestimmung der Wanddicke ermöglicht werden. Es kann zudem auch die Dicke von Wänden mit Armierungseisen, Wasserleitungen oder vergleichbaren Inhomogenitäten mit einer hinreichenden Messgenauigkeit vermessen werden.

Unter "vorgesehen" soll in diesem Zusammenhang auch "ausgelegt" und "ausgestattet" verstanden werden. Als Kenngröße für die insbesondere räumliche bzw. raumzeitliche Ortsabhängigkeit kommen insbesondere Koeffizienten aus einer räumlichen Taylorreihe oder aus einer vergleichbaren Reihenentwicklung oder Kombinationen aus solchen Koeffizienten in Betracht. Mit "Ortsabhängigkeit" des Messfelds soll insbesondere auch eine Ortsabhängigkeit einer durch eine Signallaufzeit bedingten Retardierung des Messsignals bezeichnet werden. Die Ortsabhängigkeit des Messfelds wird erfindungsgemäß durch Verschieben der Empfängereinheit und/oder der Sendereinheit ermittelt.

In kostengünstigen und klein bauenden Messvorrichtungen der erfindungsgemäßen Art wird der Verlauf des Messfelds durch Verschieben der Sensoreinheit entlang der Wand ermittelt.

Es sind neben Ausgestaltungen der Erfindung, in denen die Sendereinheit getrennt von der Empfängereinheit auf einer gegenüberliegenden Seite der zu vermessenden Wand angeordnet ist, auch weitere Ausgestaltungen der Erfindung denkbar, in denen das Messsignal von einem Reflektor reflektiert oder von einem Transmitter empfangen und reemittiert wird. In letzterem Fall können die Sendereinheit und die Empfängereinheit auf der gleichen Seite der Wand angeordnet sein und besonders vorteilhaft zu einer gemeinsamen Baugruppe zusammengefasst sein.

In einer Weiterbildung der Erfindung wird vorgeschlagen, dass die Auswerteinheit dazu vorgesehen ist, zum Bestimmen der Kenngröße das Signal in zumindest drei verschiedenen Messpunkten zu erfassen. Dadurch kann vorteilhaft eine Dielektrizitätskonstante und/oder eine Permeabilität des Wandmaterials eliminiert werden und Fehler in der Bestimmung der Wanddicke durch Fehler in der Bestimmung der Dielektrizitätskonstante und/oder der Permeabilität können vermieden werden. Eine Bestimmung der Dielektrizitätskonstante und/oder der Permeabilität kann vorteilhaft vollständig entfallen. Durch eine weitere Erhöhung der Zahl der Messpunkte bis hin zu einer quasikontinuierlichen Messung kann die Messung weiter plausibilisiert und präzisiert werden.

Ist die Auswerteinheit dazu vorgesehen, zum Bestimmen einer Signallaufzeit zumindest eine Autokorrelationsfunktion des detektierten Signals auszuwerten, können störende Einflüsse weiter minimiert werden und eine über eventuelle Inhomogenitäten des Mediums der Wand gemittelte Signallaufzeit ist mit einem Präzisionsgewinn ermittelbar. Die Signallaufzeit kann beispielsweise durch das Bilden eines Maximums der Autokorrelationsfunktion des Signals in ihrer zeitabhängigen Darstellung bestimmt werden.

Laufzeitdifferenzen und damit Wegunterschiede des Signals können einfach und sicher bestimmt werden, wenn die Auswerteinheit dazu vorgesehen ist, zum Bestimmen einer Laufzeitdifferenz zumindest eine Kreuzkorrelationsfunktion aus zwei an verschiedenen Messpositionen ermittelten Signalen zu bestimmen.

Eine Kompensation von Dispersionseffekten des Mediums der Wand kann ermöglicht werden, wenn die Messvorrichtung bzw. die Auswerteinheit über zumindest eine Fouriertransformationsfunktion, insbesondere von dem unter der Bezeichnung "Fast Fourier Transform" bekannten Typ, zum Transformieren eines zeitabhängigen Signals verfügt.

Eine alternative Laufzeitbestimmung kann erreicht werden, wenn die Auswerteinheit dazu vorgesehen ist, wenigstens eine Phase des Signals, insbesondere in seiner fouriertransformierten Form, zu bestimmen.

In einer Weiterbildung der Erfindung umfasst die Messvorrichtung ein Mittel zum Erfassen eines Verschiebewegs einer Verschiebung der Sendereinheit und/oder der Empfängereinheit. Dadurch kann die Ortsabhängigkeit des Messfelds bzw. einer davon abhängigen Größe sicher aufgezeichnet werden. Das Mittel kann beispielsweise als Rolle mit einem Drehgeber oder als bildverarbeitungsbasierter Wegsensor von dem aus optischen Computermäusen bekannten Typ ausgebildet sein.

Ist das Messfeld als Hochfrequenzfeld mit einer Frequenz im Gigahertz-Bereich, kann eine gute Durchdringung auch von armierten Betonwänden und ein gutes Signal/Rauschverhältnis erreicht werden. Messfrequenzen von zwei Gigahertz bis fünf Gigahertz sind dabei durch kostengünstige Frequenzgeneratoren realisierbar und haben dennoch eine große Eindringtiefe, wobei vorzugsweise Frequenzen aus einem Bereich von 2 GHz und mehr zum Einsatz kommen.

Ferner betrifft die Erfindung ein Verfahren gemäß Anspruch 8 zum Bestimmen einer Wanddicke einer diamagnetischen Wand.

Durch das erfindungsgemäße Verfahren kann vorteilhaft ein Einfluss von dielektrischen und/oder diamagnetischen Eigenschaften des Wandmaterials auf eine Qualität des Messergebnisses zumindest weitgehend eliminiert werden.

Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 eine Messvorrichtung mit einer Sendereinheit und mit einer Empfängereinheit,

Fig. 2 ein Ablaufdiagramm eines in der Messvorrichtung nach Figur 1 implementierten Programms zur Bestimmung einer Wanddicke und

Fig. 3 ein Ablaufdiagramm eines in der Messvorrichtung implementierten Programms in einer alternativen Ausgestaltung.

Beschreibung der Ausführungsbeispiele

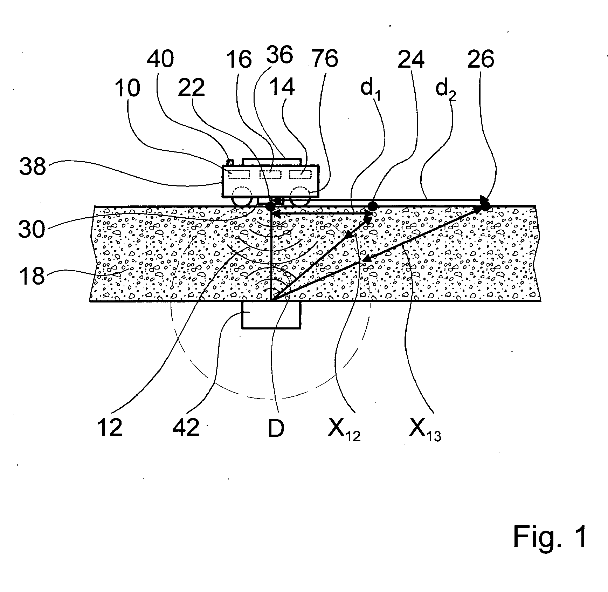

Figur 1 zeigt eine Messvorrichtung mit einer Sendereinheit 10 zum Erzeugen eines elektromagnetischen, eine Wand 18 durchdringenden Messfelds 12 und mit einer Empfängereinheit 14, die zum Detektieren eines die Wand 18 durchdringenden Teils des Messfelds 12 ausgelegt ist. Die Sendereinheit 10 und Empfängereinheit 14 sind in einem gemeinsamen Gehäuse 38 angeordnet.

Ferner umfasst die Messvorrichtung einen auf einem Stativ angeordneten oder an der Wand 18 befestigten Transponder 42, der auf einer der Sendereinheit 10 gegenüberliegenden Seite der Wand 18 angeordnet ist. Der Transponder 42 empfängt das Messfeld 12 und sendet es zurück durch die Wand 18 zu der Empfängereinheit 14. Es sind Ausgestaltungen der Erfindung denkbar, in denen der Transponder 42 als aktive oder als passive Einheit ausgebildet ist. Der Transponder 42 bildet eine zweite Sendereinheit.

Ein Bediener kann die tragbare Empfängereinheit 14 mit Rollen 76 frei über die Oberfläche der Wand 18 bewegen, um die Position des Transponders 42 bzw. eine Projektion dieser Position auf die gegenüberliegende Oberfläche der Wand 18 durch die Wand 18 hindurch aufzufinden. Das Messfeld 12 nimmt an einer der Position der Sendereinheit 10 entsprechenden Messposition 22 ein Maximum an. Eine Signallaufzeit nimmt ein Minimum an.

Ferner umfasst die Messvorrichtung eine als universell programmierbarer Prozessor ausgebildete Auswerteinheit 16 zum Auswerten eines von der Empfängereinheit 14 detektierten Signals 20. Die Auswerteinheit 16 umfasst eine hier nicht explizit dargestellte Speichereinheit.

Die Auswerteinheit 16 ist durch eine entsprechende Schnittstelle zum Ansteuern eines Displays 36 der Messvorrichtung, die wie die Auswerteinheit 16 in ein Gehäuse 38 der Empfängereinheit 14 integriert ist, ausgelegt. Über Eingabetasten 40 kann ein Bediener der Auswerteinheit 16 Steuerbefehle zur Auswahl eines Messprogramms geben. In der Messvorrichtung sind insbesondere ein an sich bekanntes Ortungsprogramm und ein Wanddicken-Messprogramm implementiert.

An einer Unterseite des Gehäuses 38 ist ein als optischer Wegsensor ausgebildetes Mittel 30 zum Erfassen eines Verschiebewegs $d_1$, $d_2$ einer Verschiebung der Empfängereinheit 14 und der Sendereinheit 10.

Die Sendereinheit 10 umfasst einen Hochfrequenzgenerator und erzeugt über eine auch von der Empfängereinheit 14 genutzte Antenne das Messfeld 12, das als Hochfrequenzfeld mit einer Frequenz im Gigahertz-Frequenzbereich ausgebildet ist. Im Wanddicken-Messprogramm und im Ortungsprogramm erzeugt die Sendereinheit 10 im Wesentlichen rechteckförmige Pulse mit einem Frequenzspektrum, das von 2 GHz bis etwa 3 GHz reicht, und mit einer Wiederholfrequenz von einigen Megahertz. Die Pulse bilden das von der Empfängereinheit 14 zu detektierende Signal 20.

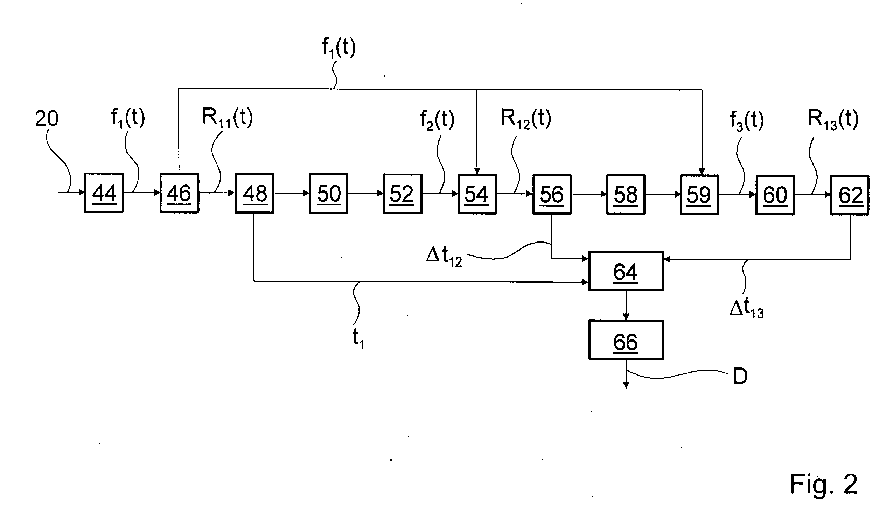

Hat der Bediener durch das Betätigen der entsprechenden Eingabetasten 40 das Wanddicken-Messprogramm ausgewählt, wird der Bediener in einem ersten Schritt 44 in einer an sich bekannten Weise über Hinweise im Display 36 zu der Messposition 22 geführt, in der die Empfängereinheit 14 dem Transponder 42 gegenüber liegt (Figur 2). In einem Schritt 46 bestimmt die Auswerteinheit 16 die Autokorrelationsfunktion

$$R_{11}(t) = \int f_1(\tau) f_1(t+\tau) \, d\tau,$$

wobei die Funktion $f_1(t)$ die Zeitabhängigkeit des Signals 20 beschreibt. Die Auswerteinheit 16 berechnet die Autokorrelationsfunktion $R_{11}(t)$ natürlich nicht in der oben angegebenen kontinuierlichen Fassung, sondern benutzt eine, dem Fachmann als sinnvoll erscheinende diskretisierte Darstellung des Integrals und eine durch einen Prozessortakt vorgegebene Diskretisierung des Signals 20 bzw. der Funktion $f_1(t)$.

In einem Schritt 48 bestimmt die Auswerteinheit 16 die Lage des Maximums der Autokorrelationsfunktion $R_{11}(t)$, die eine Signallaufzeit $t_1$ des an der Messposition 22 emittierten und durch den Transponder 42 reflektierten Signals 20 angibt, wobei eine Reaktionszeit des Transponders 42 Berücksichtigung findet. Die Auswerteinheit 16 speichert die ermittelte Signallaufzeit $t_1$ und den zeitlichen Verlauf $f_1(t)$ des Signals 20 in der Speichereinheit. Die Signallaufzeit $t_1$ ist proportional zu einer Wanddicke D und umgekehrt proportional zu der Lichtgeschwindigkeit $c_W$ im Material der Wand 18.

Anschließend fordert die Auswerteinheit 16 in einem Schritt 50 den Bediener auf, die Empfängereinheit 14 entlang der Wand 18 zu verschieben und erfasst durch das Mittel 30 einen Verschiebeweg $d_1$ der Verschiebung bis in eine zweite Messposition 24. In einem Schritt 52 ermittelt die Auswerteinheit 16 eine Funktion $f_2(t)$, die eine Zeitabhängigkeit des von der Messposition 24 empfangenen Signals 20 beschreibt und bildet in einem Schritt 54 eine Kreuzkorrelationsfunktion

$$R_{12}(t) = \int f_1(\tau) f_2(t+\tau) \, d\tau,$$

zwischen der ersten Funktion $f_1(t)$ und der zweiten Funktion $f_2(t)$. In einem Schritt 56 bestimmt die Auswerteinheit 16 die Lage eines Maximums der Kreuzkorrelationsfunktion $R_{12}(t)$, die eine Laufzeitdifferenz $\Delta t_{12}$ zwischen der Signallaufzeit $t_1$ des an der Messposition 22 empfangenen Signals 20 und einer Signallaufzeit $t_2$ des an der Messposition 24 empfangenen Signals 20 angibt.

Anschließend fordert die Auswerteinheit 16 in einem Schritt 58 den Bediener auf, die Empfängereinheit 14 entlang der Wand 18 zu verschieben und erfasst durch das Mittel 30 einen Verschiebeweg $d_2$ der Verschiebung bis in eine dritte Messposition 26. In einem Schritt 59 ermittelt die Auswerteinheit 16 eine dritte Funktion $f_3(t)$, die eine Zeitabhängigkeit des von der Messposition 26 empfangenen Signals 20 beschreibt und bildet in einem Schritt 60 eine Kreuzkorrelationsfunktion

$$R_{13}(t) = \int f_1(\tau) f_3(t+\tau) \, d\tau,$$

zwischen der ersten Funktion $f_1(t)$ und der dritten Funktion $f_3(t)$. In einem Schritt 62 bestimmt die Auswerteinheit 16 die Lage eines Maximums der Kreuzkorrelationsfunktion $R_{13}(t)$, die eine Laufzeitdifferenz $\Delta t_{13}$ zwischen der Signallaufzeit $t_1$ des an der Messposition 22 empfangenen Signals 20 und einer Signallaufzeit $t_3$ des an der Messposition 26 empfangenen Signals 20 angibt.

Aus der in der oben beschriebenen Weise ermittelten Signallaufzeit $t_1$ und aus den Laufzeitdifferenzen $\Delta t_{12}$ und $\Delta t_{13}$ berechnet die Auswerteinheit 16 in einem Schritt 64 die Signallaufzeiten $t_2$, $t_3$ der an den weiteren Messpositionen 24, 26 erfassten Signale 20.

Die ermittelten Laufzeitdifferenzen $\Delta t_{12}$ und $\Delta t_{13}$ und die ortsabhängigen Laufzeiten $t_1$, $t_2$, $t_3$ bilden Kenngrößen für die Ortsabhängigkeit des Messfelds 12 entlang der Wand 18, die alle umgekehrt proportional zu der Lichtgeschwindigkeit $c_W$ sind.

Geht man von einer konstanten Wanddicke D der Wand 18 aus, so lässt sich die Lichtgeschwindigkeit $c_W$ aus den Gleichungen zur Bestimmung der Wanddicke eliminieren. Durch einfache geometrische Betrachtungen findet man mit der verkürzten Schreibweise $x_{ij} = c_W \cdot \Delta t_{ij}/2$ (vgl. Fig. 1) für die Wanddicke D die Ausdrücke

$$D = (d_1{}^2 - x_{12}{}^2)/(2x_{12})$$

und

$$D = (d_2{}^2 - x_{13}{}^2)/(2x_{13}).$$

Ein Faktor 2 in den Hilfsgrößen $x_{ij}$ ergibt sich durch den zweifach durchlaufenen Weg zum Transponder 42 und zurück.

Aus den obigen Gleichungen ergibt sich mit den verkürzten Schreibweisen $A = \Delta t_{12}/\Delta t_{13}$ und $B = (d_2{}^2 \Delta t_{12} - d_1{}^2 \Delta t_{13})/(\Delta t_{13} - \Delta t_{12})$ der Wert

$$D = (d_2{}^2 - B/A)/(2 \sqrt{(B/A)})$$

für die Wanddicke D, der unabhängig von der Lichtgeschwindigkeit $c_W$ im Medium der Wand ist.

Die Auswerteinheit 16 bestimmt in einem Schritt 66 gemäß der obigen Gleichung den Wert der Wanddicke D und stellt ihn auf dem Display 36 dar.

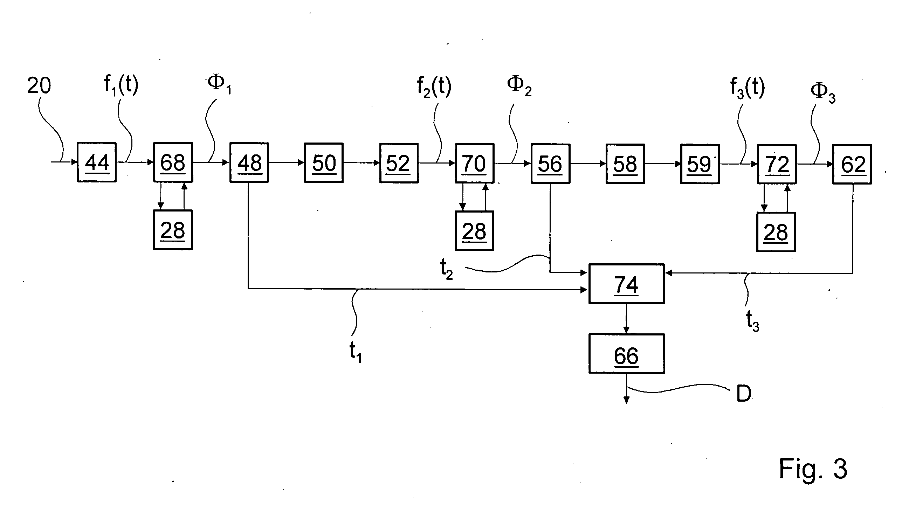

Figur 3 zeigt eine alternative Ausgestaltung des in Figur 2 dargestellten Messprogramms, das dem oben beschriebenen Messprogramm in den meisten Punkten gleicht. In der Beschreibung zu Figur 3 wird daher im Wesentlichen auf Unterschiede zu dem in Figur 2 dargestellten Programm eingegangen. In Hinblick auf gleich bleibende Merkmale wird auf die Beschreibung zu den Figuren 1 und 2 verwiesen. Analoge Merkmale sind mit gleichen Bezugszeichen versehen.

Im Unterschied zu der im Figur 2 dargestellten Ausgestaltung ermittelt die Auswerteinheit 16 keine Autokorrelationsfunktion und keine Kreuzkorrelationsfunktiohen zur Bestimmung der Laufzeiten $t_1$ - $t_3$ und Laufzeitdifferenzen $\Delta t_{12}$, $\Delta t_{13}$, sondern bildet in Schritten 68 - 72 durch das Aufrufen einer Fouriertransformationsfunktion 28 jeweils eine fouriertransformierte der Funktionen $f_1(t)$ - $f_3(t)$ und ermittelt jeweils eine Phase $\phi_1$ - $\phi_3$ der fouriertransformierten Funktionen. Die Fouriertransformation wird durch digitale Filterung auf einen Frequenzbereich von 1,8 GHz bis 3 GHz beschränkt. Aus den Phasen $\phi_1$ - $\phi_3$ ergeben sich durch Division mit der Frequenzen der entsprechenden Fouriermoden die Signallaufzeiten $t_1$ - $t_3$, die über die verschiedenen Fouriermoden gemittelt werden können. Aus den Signallaufzeiten $t_1$ - $t_3$ berechnet die Auswerteinheit 16 in einem Schritt 74 die Laufzeitdifferenzen $\Delta t_{12} = t_2 - t_1$ und $\Delta t_{13} = t_3 - t_1$.

In weiteren Ausgestaltungen der Erfindung ermittelt die Auswerteinheit 16 Signallaufzeiten in mehr als drei Messpunkten und plausibilisiert dadurch das Messergebnis. Im Fall einer Inkonsistenz der ermittelten Werte gibt die Auswerteinheit 16 ein Warnsignal aus.

|  | Bezugszeichen |  |  |
|---|---|---|---|
| 10 | Sendereinheit | 60 | Schritt |
| 12 | Messfeld | 62 | Schritt |
| 14 | Empfängereinheit | 64 | Schritt |
| 16 | Auswerteinheit | 66 | Schritt |
| 18 | Wand | 68 | Schritt |
| 20 | Signal | 70 | Schritt |
| 22 | Messposition | 72 | Schritt |
| 24 | Messposition | 74 | Schritt |

(fortgesetzt)

| | | | |
|---|---|---|---|
| 26 | Messposition | 76 | Rolle |
| 28 | Fouriertransformationsfunktion | D | Wanddicke |
| | | $t_1$ | Signallaufzeit |
| 30 | Mittel | $t_2$ | Signallaufzeit |
| 36 | Display | $t_3$ | Signallaufzeit |
| 38 | Gehäuse | $\Delta t_{12}$ | Laufzeitdifferenz |
| 40 | Eingabetaste | $\Delta t_{13}$ | Laufzeitdifferenz |
| 42 | Transponder | $R_{11}$ | Autokorrelationsfunktion |
| 44 | Schritt | | |
| 46 | Schritt | $R_{12}$ | Kreuzkorrelationsfunk-tion |
| 48 | Schritt | | |
| 50 | Schritt | $R_{13}$ | Kreuzkorrelationsfunktion |
| 52 | Schritt | | |
| 54 | Schritt | $d_1$ | Verschiebeweg |
| 56 | Schritt | $d_2$ | Verschiebeweg |
| 58 | Schritt | $\phi_1$ | Phase |
| 59 | Schritt | | |
| $\phi_2$ | Phase | | |
| $\phi_3$ | Phase | | |

**Patentansprüche**

1. Messvorrichtung mit einer Sendereinheit (10, 42) zum Erzeugen eines elektromagnetischen, eine Wand (18) durchdringenden Messfelds (12), mit einer Empfängereinheit (14) zum Detektieren wenigstens eines Teils des Messfelds (12) und mit einer Auswerteinheit (16) zum Auswerten eines von der Empfängereinheit (14) detektierten Signals (20), **dadurch gekennzeichnet, dass** die Auswerteinheit (16) dazu vorgesehen ist, zumindest eine Kenngröße ($t_1$ - $t_3$, $\Delta t_{12}$, $\Delta t_{13}$) für eine Ortsabhängigkeit des Messfelds (12) entlang der Wand (18) durch Verschieben der Sendereinheit (10, 42) und/oder Empfängereinheit (14) entlang der Wand, zu ermitteln und abhängig von der Kenngröße ($t_1$ - $t_3$, $\Delta t_{12}$, $\Delta t_{13}$) eine Wanddicke (D) der Wand (18) zu bestimmen, wobei Mittel (30) zum Erfassen eines Verschiebeweges ($d_1$, $d_2$) einer Verschiebung der Sendereinheit (10, 42) und/oder der Empfangseinheit (14) vorgesehen sind.

2. Messvorrichtung nach Anspruch 1, **dadurch gekennzeichnet, dass** die Auswerteinheit (16) dazu vorgesehen ist, zum Bestimmen der Kenngröße ($t_1$ - $t_3$, $\Delta t_{12}$, $\Delta t_{13}$) das Signal (20) in zumindest drei verschiedenen Messpositionen (22, 24, 26) zu erfassen.

3. Messvorrichtung nach einem der vorhergehenden Ansprüche, **dadurch gekennzeichnet, dass** die Auswerteinheit (16) dazu vorgesehen ist, zum Bestimmen einer Signallaufzeit ($t_1$, $t_2$, $t_3$) zumindest eine Autokorrelationsfunktion ($R_{11}$) des detektierten Signals (20) auszuwerten.

4. Messvorrichtung nach einem der vorhergehenden Ansprüche, **dadurch gekennzeichnet, dass** die Auswerteinheit (16) dazu vorgesehen ist, zum Bestimmen einer Laufzeitdifferenz ($\Delta t_{12}$, $\Delta t_{13}$) zumindest eine Kreuzkorrelationsfunktion ($R_{12}$, $R_{13}$) aus zwei an verschiedenen Messpositionen (22 - 26) ermittelten Signalen (20) zu bestimmen.

5. Messvorrichtung nach einem der vorhergehenden Ansprüche, **gekennzeichnet durch** zumindest eine Fouriertransformationsfunktion (28) zum Transformieren des zeitabhängigen Signals (20).

6. Messvorrichtung nach einem der vorhergehenden Ansprüche, **dadurch gekennzeichnet dass** die Auswerteinheit (16) dazu vorgesehen ist, wenigstens eine Phase ($\phi_1$, $\phi_2$, $\phi_3$) des Signals (20) zu bestimmten.

7. Messvorrichtung nach einem der vorhergehenden Ansprüche, **dadurch gekennzeichnet, dass** das Messfeld (12) als Hochfrequenzfeld mit einer Frequenz im Gigahertz-Frequenzbereich ausgebildet ist.

8. Verfahren zum Bestimmen einer Wanddicke (D) einer diamagnetischen Wand (18) durch eine tragbare Messvorrichtung mit einer Sendereinheit (10, 42) zum Erzeugen eines die Wand (18) durchdringenden Messfelds (12), mit einer Empfängereinheit (14) zum Detektieren wenigstens eines Teils des Messfelds (12), wobei die Sendeeinheit (10) und die Empfängereinheit (14) in einem gemeinsamen Gehäuse angeordnet sind, und in einem Auswerteschritt zumindest eine Kenngröße ($t_1$ - $t_3$, $\Delta t_{12}$, $\Delta t_{13}$) für eine Ortsabhängigkeit des Messfelds (12) entlang der Wand (18) durch Verschiebung der Sendereinheit (10, 42) und/oder der Empfangseinheit (14) ermittelt wird und abhängig von der Kenngröße ($t_1$ - $t_3$, $\Delta t_{12}$, $\Delta t_{13}$) eine Wanddicke (D) der Wand (18) bestimmt wird, wobei über Mittel (30) der Messvorrichtung der Verschiebeweg ($d_1$, $d_2$) der Verschiebung der Sendereinheit (10, 42) und/oder der Empfangseinheit (14) erfasst wird.

## Claims

1. Measuring device having a transmitter unit (10, 42) for generating an electromagnetic measuring field (12) penetrating a wall (18), having a receiver unit (14) for detecting at least a portion of the measuring field (12), and having an evaluation unit (16) for evaluating a signal (20) detected by the receiver unit (14), **characterized in that** the evaluation unit (16) is provided for the purpose of ascertaining at least one parameter ($t_1$-$t_3$, $\Delta t_{12}$, $\Delta t_{13}$) for a spatial dependence of the measuring field (12) along the wall (18) by displacing the transmitter unit (10, 42) and/or receiver unit (14) along the wall, and for determining a wall thickness (D) of the wall (18) as a function of the parameter ($t_1$-$t_3$, $\Delta t_{12}$, $\Delta t_{13}$) means (30) being provided for detecting a displacement path ($d_1$, $d_2$) of a displacement of the transmitter unit (10, 42) and/or of the receiver unit (14).

2. Measuring device according to Claim 1, **characterized in that** the evaluation unit (16) is provided for the purpose of determining the parameter ($t_1$-$t_3$, $\Delta t_{12}$, $\Delta t_{13}$) by detecting the signal (20) in at least three different measuring positions (22, 24, 26).

3. Measuring device according to one of the preceding claims, **characterized in that** the evaluation unit (16) is provided for the purpose of determining a signal run time ($t_1$, $t_2$, $t_3$) by evaluating at least one autocorrelation function ($R_{11}$) of the detected signal (20).

4. Measuring device according to one of the preceding claims, **characterized in that** the evaluation unit (16) is provided for the purpose of determining a run time difference ($\Delta t_{12}$, $\Delta t_{13}$) by determining at least one crosscorrelation function ($R_{12}$, $R_{13}$) from two signals (20) ascertained at different measuring positions (22-26).

5. Measuring device according to one of the preceding claims, **characterized by** at least one Fourier transformation function (28) for transforming the time-dependent signal (20).

6. Measuring device according to one of the preceding claims, **characterized in that** the evaluation unit (16) is provided in order to determine at least one phase ($\Phi_1$, $\Phi_2$, $\Phi_3$) of the signal (20).

7. Measuring device according to one of the preceding claims, **characterized in that** the measuring field (12) is designed as a high-frequency field with a frequency in the gigahertz frequency range.

8. Method for determining a wall thickness (D) of a diamagnetic wall (18) by means of a portable measuring device having a transmitter unit (10, 42) for generating a measuring field (12) penetrating the wall (18), and having a receiver unit (14) for detecting at least a portion of the measuring field (12), wherein the transmitter unit (10) and the receiver unit (14) are arranged in a common housing, and at least one parameter ($t_1$-$t_3$, $\Delta t_{12}$, $\Delta t_{13}$) for a spatial dependence of the measuring field (12) along the wall (18) is determined in an evaluation step by displacing the transmitter unit (10, 42) and/or the receiver unit (14), and a wall thickness (D) of the wall (18) is determined as a function of the parameter ($t_1$-$t_3$, $\Delta t_{12}$, $\Delta t_{13}$), and wherein the displacement path ($d_1$, $d_2$) of the displacement of the transmitter unit (10, 42) and/or of the receiver unit (14) is acquired via means (30) of the measuring device.

## Revendications

1. Dispositif de mesure comportant une unité d'émission (10, 42) destinée à générer un champ de mesure (12) pénétrant à travers une paroi (18), comportant une unité de réception (14) destinée à détecter au moins une partie du champ de mesure (12) et comportant une unité d'évaluation (16) destinée à évaluer un signal (20) détecté par l'unité de réception (14), **caractérisé en ce que** l'unité d'évaluation (16) est prévue pour obtenir au moins une grandeur

caractéristique ($t_1$-$t_3$, $\Delta t_{12}$, $\Delta t_{13}$) pour une dépendance spatiale du champ de mesure (12) le long de la paroi (18) en déplaçant l'unité d'émission (10, 42) et/ou l'unité de réception (14) le long de la paroi, et pour déterminer une épaisseur de paroi (D) de la paroi (18) en fonction de la grandeur caractéristique ($t_1$-$t_3$, $\Delta t_{12}$, $\Delta t_{13}$), dans lequel des moyens (30) sont prévus pour détecter un trajet de déplacement ($d_1$, $d_2$) d'un déplacement de l'unité d'émission (10, 42) et/ou de l'unité de réception (14).

**2.** Dispositif selon la revendication 1, **caractérisé en ce que** l'unité d'évaluation (16) est prévue pour détecter le signal (20) en au moins trois positions de mesure différentes (22, 24, 26) afin de déterminer la grandeur caractéristique ($t_1$-$t_3$, $\Delta t_{12}$, $\Delta t_{13}$).

**3.** Dispositif de mesure selon l'une quelconque des revendications précédentes, **caractérisé en ce que** l'unité d'évaluation (16) est prévue pour évaluer au moins une fonction d'autocorrélation ($R_{11}$) du signal détecté (20) afin de déterminer un temps de propagation de signal ($t_1$, $t_2$, $t_3$).

**4.** Dispositif de mesure selon l'une quelconque des revendications précédentes, **caractérisé en ce que** l'unité d'évaluation (16) est prévue pour déterminer au moins une fonction d'intercorrélation ($R_{12}$, $R_{13}$) à partir de signaux (20) obtenus en différentes positions de mesure (22 - 26) afin de déterminer une différence de temps de propagation ($\Delta t_{12}$, $\Delta t_{13}$).

**5.** Dispositif de mesure selon l'une quelconque des revendications précédentes, **caractérisé par** au moins une fonction de transformation de Fourier (28) destinée à transformer le signal (20) fonction du temps.

**6.** Dispositif de mesure selon l'une quelconque des revendications précédentes, **caractérisé en ce que** l'unité d'évaluation (16) est prévue pour déterminer au moins une phase ($\phi_1$, $\phi_2$, $\phi_3$) du signal (20).

**7.** Dispositif de mesure selon l'une quelconque des revendications précédentes, **caractérisé en ce que** le champ de mesure (12) se présente sous la forme d'un champ à haute fréquence ayant une fréquence se situant dans le domaine de fréquences de l'ordre du gigahertz.

**8.** Procédé pour déterminer une épaisseur de paroi (D) d'une paroi diamagnétique (18) au moyen d'un dispositif de mesure portable comportant une unité d'émission (10, 42) destinée à générer un champ de mesure (12) pénétrant à travers la paroi (18), comportant une unité de réception (14) destinée à détecter au moins une partie du champ de mesure (12), dans lequel l'unité d'émission (10) et l'unité de réception (14) sont disposées dans un boîtier commun, et dans lequel au moins une grandeur caractéristique ($t_1$-$t_3$, $\Delta t_{12}$, $\Delta t_{13}$) est obtenue pour une dépendance spatiale du champ de mesure (12) le long de la paroi (18) en déplaçant l'unité d'émission (10, 42) et/ou l'unité de réception (14), et une épaisseur de paroi (D) de la paroi (18) est déterminée en fonction de la grandeur caractéristique ($t_1$-$t_3$, $\Delta t_{12}$, $\Delta t_{13}$), dans lequel le trajet de déplacement ($d_1$, $d_2$) du déplacement de l'unité d'émission (10, 42) et/ou de l'unité de réception (14) est détecté par l'intermédiaire de moyens (30) du dispositif de mesure.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5434500 A
- US 5835053 A
- GB 2307811 A
- EP 0382981 A2